# EUROPÄISCHE PATENTSCHRIFT

(11) **EP 3 816 505 B1**
(45) Veröffentlichungstag und Bekanntmachung des Hinweises auf die Patenterteilung: **03.04.2024**
(21) Anmeldenummer: 20000379.6
(22) Anmeldetag: 20.10.2020
(51) Int. Cl.: F21V 8/00, F21K 9/61, F21W 121/00, F21W 121/04

(54) **LICHTLEITVORRICHTUNG UND SET**
LIGHT GUIDING DEVICE AND SET
DISPOSITIF DE GUIDAGE DE LA LUMIÈRE ET ENSEMBLE

(30) Priorität: 28.10.2019 DE 102019129080
(43) Veröffentlichungstag der Anmeldung: 05.05.2021
(73) Patentinhaber: Ritzerfeld, Dennis, 76646 Bruchsal (DE)
(72) Erfinder: Ritzerfeld, Dennis, 76646 Bruchsal (DE)
(74) Vertreter: Mehl-Mikus, Claudia

(56) Entgegenhaltungen:
- EP-A1- 1 714 593
- WO-A1-00/19143
- US-A- 2 301 768
- US-A- 2 499 824
- US-A- 3 048 694
- US-A1- 2016 053 978
- US-B1- 10 274 179

## Beschreibung

Die Erfindung betrifft eine Lichtleitvorrichtung und ein Lichtleit-Set mit mehreren dieser Lichtleitvorrichtungen.

Lichtleitvorrichtungen, die zu dekorativen oder Werbezwecken eingesetzt werden, sind aus dem Stand der Technik bekannt. Dabei kann der Effekt der Kantenbeleuchtung genutzt werden, der bewirkt, dass an einer Kante in ein lichtleitendes Objekt eingestrahltes Licht intern reflektiert wird und das Objekt nur an weiteren Kanten oder eingebrachten Strukturen wieder verlässt, die dabei leuchtend sichtbar werden. Damit lassen sich besondere Lichtanzeigen gestalten.

Die US 2006/0207134 A1 beschreibt eine Anwendung von kantenbeleuchteten Anzeigevorrichtungen, die mehrere hintereinander angeordnete Scheiben, in die jeweils ein Muster eingebracht ist, aufweist. In diesen Scheiben liegen an einer Kante Lichtquellen vor, die vollständig in den jeweiligen Scheiben aufgenommen und abwechselnd aktiviert werden und die Scheiben mit unterschiedlichen Mustern nacheinander aufleuchten lassen.

Eine Kontrollanzeigevorrichtung für sogenannte PDAs (Personal Digital Assistants), die Licht mittels einer Diode in einen Licht leitenden dreidimensionalen Körper einkoppelt, ist aus der CN 101 676 621 A bekannt. Die Diode wird ganz in das Lichtleitelement eingesetzt, das so beschaffen ist, dass das in den Körper eingekoppelte Licht möglichst umfassend an einer leuchtenden Kontrollfläche des PDAs austritt.

Eine Lichtleitstruktur, die ein Loch zur Aufnahme einer oder mehrerer Diodenstrukturen aufweist, ist auch aus US 2009 / 0 174 300 A1 bekannt. Als Halteelemente für die Diode in dem Loch werden dort Metalldrähte außerhalb oder auch teils innerhalb der Lichtstruktur umgebogen. Das Loch, in dem die Diodenstruktur angeordnet wird, kann beispielsweise mit Harz ausgegossen werden.

Ausgehend von diesem Stand der Technik ist es Aufgabe der vorliegenden Erfindung, eine flexibel einsetzbare, einfach konstruierte Lichtleitvorrichtung bereitzustellen, die mit Leuchtmitteln kostengünstig und einfach ausgestattet werden kann.

Diese Aufgabe wird durch eine Lichtleitvorrichtung mit den Merkmalen des Anspruchs 1 gelöst.

Die weitere Aufgabe, Mittel bereitzustellen, um variierbar unterschiedliche Lichtanzeigen darstellen zu können, wird durch das Lichtleit-Set mit den Merkmalen des Anspruchs 10 gelöst.

Weiterbildungen und bevorzugte Ausführungsformen der Lichtleitvorrichtung und des Lichtleit-Sets sind in den Unteransprüchen ausgeführt.

Gemäß einer ersten Ausführungsform der Lichtleitvorrichtung, die zur Aufnahme eines Leuchtmittels ausgebildet ist, weist die Lichtleitvorrichtung zumindest einen Adapter für das Leuchtmittels und ein zumindest teilweise transparentes Lichtleitelement auf. Unter "teilweise transparentes Lichtleitelement" ist zu verstehen, dass das Lichtleitelement zumindest Abschnitte aufweist, die transparent für Licht eines Wellenlängenbereichs innerhalb des für das menschliche Auge sichtbaren Spektrums sind; es kann durchaus auch transluzente und opake Abschnitte aufweisen. Der Adapter hat eine zylindrische Ausnehmung, in die genau ein Leuchtmittel eingesetzt wird, wenn die Lichtleitvorrichtung zum Einsatz kommt (Anwendungszustand, dann ist natürlich das Leuchtmittel mit einer Energieversorgung zu verbinden). Mit anderen Worten: Der Adapter haust das Leuchtmittel; seine Außenmantelfläche umgibt und schützt es. Das Lichtleitelement weist eine oder auch mehrere Ausnehmungen auf, in der bzw. denen nur der vordere Endabschnitt des Adapters lösbar aufgenommen ist. Der vordere Endabschnitt weist an dem in der Ausnehmung anliegenden Teil eine durchgängige Materialdecke auf. Im Grunde ist der Endabschnitt so kappenartig oder kuppelartig geschlossen und schützt dadurch das Leuchtmittel. Der Adapter ist zumindest an für Lichtdurchtritt vorgesehenen Stellen transparent oder transluzent für das Licht des Leuchtmittels.

Vorteilhaft an der lösbaren Aufnahme ist, dass Adapter und Lichtleitvorrichtung getrennt voneinander aufbewahrt werden können; es ist außerdem vorteilhaft möglich, ein und denselben Adapter für verschiedene Lichtleitvorrichtungen einzusetzen; außerdem kann im Falle eines kaputten Leuchtmittels rasch durch Austausch des Adapters mit neuem Leuchtmittel wieder Funktionsfähigkeit hergestellt werden.

Mit einem energieversorgten Leuchtmittel ausgestattet, das Licht emittiert, wird auf einfachste Weise kostengünstig ein optisch ansprechender Lichteffekt erzeugt, denn das Licht wird über den Adapter, der für gute Lichtübertragung den möglichst direkten Kontakt vom Leuchtmittel zum Lichtleitelement herstellt und, in das Lichtleitelement eingekoppelt. Die für den Lichtdurchtritt vorgesehenen Stellen heißen auch Kontaktstellen. Aufgrund der Innenreflexion des Lichtleitelements tritt das eingekoppelte Licht nicht entlang der Oberfläche des Lichtleitelements aus, sondern nur an dessen Rand bzw. an Kanten, die an den Konturen oder innerhalb des Lichtleitelements vorliegen.

Es ist möglich, dass ein Lichtleitelement mehrere Ausnehmungen aufweist, in denen jeweils ein Adapter aufgenommen ist, sodass entsprechend mehrere Leuchtmittel, pro Adapter eines, zu einem attraktiven Lichteffekt führen.

In einer einfachen Ausführungsform wird ein Leuchtmittel in einen Adapter und dieser in eine Ausnehmung eines Lichtleitelements gesteckt.

Das Lichtleitelement kann auf einfache Weise und ohne Montageaufwand vom Adapter gelöst, der bei Bedarf mit einem anderen Lichtleitelement gekoppelt wreden kann. Je nach Dekorations- oder Werbezweck können die Adapter mit unterschiedlichen Lichtleitelementen, die unterschiedliche Objekte, Formen etc. darstellen, kombiniert werden.

Als Beispiel sei eine jahreszeit- bzw. feiertagssaisonabhängige Beleuchtung genannt. Dafür ist keine komplexe elektronische Schaltung nötig; der Wechsel erfolgt manuell über Austausch der Lichtleitelemente. Vorteilhaft können durch die Lösbarkeit der Adapter diese samt Leuchtmittel in den ausgetauschten Lichtleitelementen verwendet werden.

In einer weiteren Ausführungsform ist das Lichtleitelement eine Scheibe mit einer bestimmten Dicke, wobei ein Verbindungsabschnitt der Scheibe sich in einer Ebene erstreckt, die orthogonal zu einer Längsachse des Adapters verläuft. Dieser Verbindungsabschnitt der Scheibe weist die zumindest eine Ausnehmung auf. Die Umfangsform der Ausnehmung entspricht dabei einem Außenumfang des Endabschnitts des Adapters. Bei einer Ausnehmung in einer Scheibe kann diese ein Ausschnitt sein, der am Rande der Scheibe vorliegt und U-förmig ist, um damit der Mantelfläche des Adapters zu entsprechen, oder ein Ausschnitt mit Kreisform in der Scheibe, wenn der Adapter mit seinem Endabschnitt etwa in die Scheibe eingesteckt wird. Der Endabschnitt muss dabei nicht vollständig in der Ausnehmung aufgenommen sein, ein Teil des Endabschnitts kann über die Ebene der Scheibe hinausragen.

Von dem Leuchtmittel abgestrahltes Licht wird an dem Umfang der Ausnehmung des Lichtleitelements, der um den Außenumfang des Endabschnitts des Adapters am Adapter anliegt, in das Lichtleitelement eingekoppelt, insbesondere die dort parallel zur Scheibe verlaufenden Anteile. Die Scheibe kann neben dem Verbindungsabschnitt einen oder mehrere abgewinkelt dazu verlaufende Abschnitte aufweisen, auch eine dreidimensionale geometrische Gesamtform ist möglich.

In einer weiteren Ausführungsform der erfindungsgemäßen Vorrichtung kann ein Verbinderelementepaar die Scheibe mit dem Adapter lösbar verbinden, beispielsweise dadurch, dass das Verbinderelementepaar ein Innengewinde und ein Außengewinde umfasst, wobei das Innengewinde in die Ausnehmung der Scheibe eingebracht ist und das Außengewinde umfänglich an dem Endabschnitt des Adapters vorliegt oder umgekehrt. Der Adapter kann z. B. auch durch eine Öffnung geschoben werden und durch die arretierte Scheibe daran gehindert werden, durch diese Öffnung zurück zu rutschen. So sind vielfältige Dekorationsmöglichkeiten eröffnet, wobei die Leuchtmittel oder zumindest deren Energiezuführvorrichtungen verdeckt vorliegen.

In einer alternativen Ausführungsform ist das Lichtleitelement eine Platte mit einer bestimmten Dicke, die einen Verbindungsabschnitt aufweist, der sich in einer Ebene erstreckt, die achsparallel zu einer Längsachse des Adapters verläuft. Dabei weist die Platte die zumindest eine Ausnehmung auf. Die Umfangsform der Ausnehmung der Platte entspricht einer Längsschnittsform des Endabschnitts des Adapters.

Ein oder mehrere Verbinderelementepaare verbinden die Platte mit dem Adapter, wobei bevorzugt ein Verbinderelementepaar aus einer Rille und einer zu der Rille korrespondierenden Schiene besteht, wobei bevorzugt die Rille in eine Außenmantelfläche des Adapters eingebracht ist und die Schiene durch einen Randabschnitt der Ausnehmung der Platte bereitgestellt ist.

An zwei Längsseiten des Adapters vorliegende Rillen können beispielsweise mit jeweils einem Randabschnitt der Ausnehmung, in die der Adapter gesteckt wird, und der dann die Schiene bildet, verbunden werden; es entstehen so zwei Verbinderelementepaare aus Rille und Schiene. Die Rillen verlaufen dann entlang der Länge des Endabschnitts parallel zur Längsachse des Adapters. Die Breite der Schiene entspricht dabei der Dicke des Randabschnitts. Diese kann durch die Dicke der Platte festgelegt sein, dann muss der Randabschnitt nicht eigens geformt werden. Es ist auch möglich, den Randabschnitt dünner als die Dicke der Platte zu gestalten, damit er in die Rille des Adapters passt.

Andere Verbinderelementepaare sind ebenso möglich, bspw. sich entlang des Umfangs des Adapters bzw. dessen Endabschnitts helixartig windende Rillen und dazu korrespondierende Schienen oder andere zueinander korrespondierende Formelemente wie Wölbungen und Mulden.

Eine weitere Ausführungsform der erfindungsgemäßen Lichtleitvorrichtung sieht als Lichtleitelement zwei oder mehr Platten mit einer Dicke vor. Die Platten kreuzen sich derart, dass ein gemeinsamer Verbindungsabschnitt gebildet wird, der sich in einer oder mehreren Ebenen erstreckt. Die Ebene oder die Ebenen verlaufen jeweils achsparallel zur Längsachse des Adapters. Die Platten bilden gemeinsam die Ausnehmung (oder mehrere Ausnehmungen), in der der Adapter aufgenommen ist bzw. aufnehmbar ist, ggf. indem sich jeweils Ausnehmungen der einzelnen Platten im gemeinsamen Verbindungsabschnitt ebenfalls entsprechend kreuzen. Um die Platten mit dem Adapter zu verbinden kann die Umfangsform der Ausnehmung der Längsschnittsform des Endabschnitts des Adapters entsprechen, und/oder es liegen ein Verbinderelementepaar oder mehrere Verbinderelementepaare vor. Bevorzugt besteht auch in dieser Ausführungsform, wie in der Ausführungsform mit nur einer Platte als Leitelement, ein Verbinderelementepaar aus einer Rille und einer zu der Rille korrespondierenden Schiene. Weiter bevorzugt ist die Rille in eine Außenmantelfläche des Adapters eingebracht und die Schiene durch einen Randabschnitt der Ausnehmung der Platten bereitgestellt.

Wenn sich die Platten so kreuzen, dass ein Verbindungsabschnitt in nur einer Ebene liegt, werden also zwei Verbinderelementepaare aus Rille und Schiene, wie zuvor für eine Platte beschrieben, gebildet, wobei die Schiene durch Überlagerung von zwei oder mehr Platten am gemeinsamen Verbindungsabschnitt eine Breite aufweisen kann, die der Summe der Dicken dieser Platten entspricht. Verläuft der Verbindungsabschnitt hingegen in mehreren Ebenen, können für jede Platte zwei Rillen vorliegen. Bei gleichartigen Platten, die alle die gleiche Dicke aufweisen, können diese Rillen gleichförmig sein und jeweils einen der als Schiene fungierenden, identischen Randabschnitte aufnehmen.

Die Form und die Anordnung der Platten können beliebig sein. So sind ebene sowie ein- oder mehrfach abgewinkelte, symmetrisch oder asymmetrisch zur Längsachse des Adapters angeordnete Platten sowie Platten, die in der Summe eine dreidimensionale Form darstellen, denkbar. Die Anzahl der Platten ist im Grunde ebenso beliebig, wobei mit Anordnungen von zwei bis sechs sich kreuzenden Platten eine große Vielfalt an Formen darstellbar ist.

In einer dazu alternativen Ausführungsform der Lichtleitvorrichtung ist das Lichtleitelement ein massiver Körper, der die zumindest eine Ausnehmung aufweist, wobei die Ausnehmung dem Endabschnitt des Adapters in Länge, Umfang und Umfangsform entspricht. Auch in dieser Ausführungsform kann alternativ oder zusätzlich ein oder mehrere Verbinderelementepaare den Körper mit dem Adapter verbinden. Da der Endabschnitt des Adapters nahezu vollumfänglich in der Ausnehmung des Körpers aufgenommen wird, kann es sich bei dem Verbinderelementepaar sowohl um ein Innengewinde und ein Außengewinde handeln, wobei das Innengewinde in die Ausnehmung des Körpers eingeschnitten ist und das Außengewinde umfänglich an dem Endabschnitt des Adapters vorliegt als auch um eine Rille und einer zu der Rille korrespondierenden Schiene. Für die Befestigung des Adapters an dem Körper als Lichtleitelement spielt es keine Rolle, ob die Rille in eine Außenmantelfläche des Adapters eingebracht ist und die Schiene am Umfang der Ausnehmung des Körpers vorliegt, oder umgekehrt. Erstgenannte Variante bietet jedoch den Vorteil, dass der Adapter sowohl für diese Ausführungsform mit Körper als auch für die zuvor beschriebenen Varianten mit Scheibe, Platte oder Platten nutzbar ist und für die Gestaltung verschiedener Lichteffekte ein einfacher Austausch des Lichtleitelements vorgenommen werden kann.

Zusätzlich kann der Adapter von zumindest einem Sicherungselementepaar im jeweiligen Lichtleitelement gehalten werden. Vorteilhaft kann die Lichtleitvorrichtung beliebig platziert und z. B. auch hängend genutzt werden, ohne dass sich das Lichtleitelement vom Adapter löst, und dennoch kann durch gezieltes manuelles Angreifen die Verbindung wieder gelöst werden. In einer bevorzugten Ausführungsform besteht das Sicherungselementepaar aus einem Steg und einer dazu korrespondierenden Nut, in die der Steg formschlüssig aufgenommen werden kann. Bevorzugt liegt der Steg an dem Endabschnitt des Adapters und die Nut an der Ausnehmung des Lichtleitelements vor. Der Steg kann dazu insbesondere innerhalb der zuvor beschriebenen Rille(n) vorliegen, oder den Endabschnitt des Adapters zum Leuchtmittel hin begrenzen, und den Umfang des Endabschnitts des Adapters an dieser Stelle vergrößern, wobei die Nut eine zusätzliche Kerbe in der Ausnehmung des Lichtleitelements ist.

Die Sicherung kann auch durch einen zusätzlichen Sicherungsaufsatz erfolgen, der eine Ausnehmung aufweist. Der Sicherungsaufsatz kann, wie zuvor für die Lichtleitelemente beschrieben, in dieser Ausnehmung den Endabschnitt des Adapters aufnehmen und mit diesem sicher verbunden werden. Zumindest ein Sicherungselementepaar verbindet den Sicherungsaufsatz mit dem Adapter; es kann bevorzugt aus einem umfänglich an dem Kopfteil des Endabschnitts des Adapters vorliegenden Außengewinde und einem in die Ausnehmung des Sicherungsaufsatzes eingeschnittenen Innengewinde bestehen, und/ oder aus einem Steg und einer Nut, wobei bevorzugt der Steg an dem Endabschnitt des Adapters und die Nut an der Ausnehmung des Sicherungsaufsatzes vorliegt. So kann vorteilhaft das Lichtleitelement durch den Sicherungsaufsatz an dem Adapter angeklemmt werden. Das Lichtleitelement braucht dann, außer der Ausnehmung, keine zusätzlichen Verbinder- undloder Sicherungselemente, da beides durch den Sicherungsaufsatz bereitgestellt wird.

In eine bevorzugte Ausführungsform der Lichtleitvorrichtungen können diese mit LEDs betrieben werden; dann wird eine LED in die zylindrische Ausnehmung des Adapters gesteckt; bspw. eine bedrahtete Standard-LED im 5 mm-Gehäuse. Diese verbreitete LED-Form bringt ausreichend hohe Lichtstärken bei sparsamem Energieeinsatz hervor. Andere Leuchtmittel, die Licht im sichtbaren Wellenlängenbereich abstrahlen, sind aber ebenso geeignet, auch Micro-LEDs oder konventionelle bzw. miniaturisierte Glühbirnen. Für den Fachmann ergibt sich aus dem aufzunehmenden Leuchtmittel unmittelbar die notwendige Größe und Form der zylindrischen Ausnehmung des Adapters.

Bei einer weiteren Ausführungsform der erfindungsgemäßen Lichtleitvorrichtung liegen an dem Lichtleitelement Lichtstreustrukturen vor, die bevorzugt offene Kanäle oder Mulden sind. Diese sind in zumindest eine Oberfläche des Lichtleitelements eingebracht. "Eingebracht" meint hier jede Art des Bereitstellens der Lichtstreustruktur, egal ob durch mechanisches Einritzen oder Einschneiden, Lasern oder Ätzen im Nachgang zur Fertigung des Lichtleitelements oder dessen Grundmaterial, oder direkt bei der Fertigung, beispielsweise mittels 3D-Druck. An diesen Lichtstreustrukturen, die sich von der Ausnehmung des Lichtleitelements weg erstrecken oder auch frei in der Fläche bzw. Oberfläche des Lichtleitelements vorliegen können, wird das über den Adapter in das Lichtleitelement eingekoppelte Licht gestreut und wieder aus dem Lichtleitelement ausgekoppelt. So können die Lichtstreustrukturen als leuchtende Elemente wahrgenommen werden. Buchstaben, Zahlen, Logos und Symbole, Muster, selbst Bilder können als Lichtstreustrukturen einzeln oder in Kombination in die Oberfläche des Lichtleitelements eingebracht sein. Diese können auch individuell nach Kundenwünschen gefertigt werden.

Das Lichtleitelement kann aus einem transparenten Kunststoff wie bspw. Polymethylmethacrylat bestehen, das günstig in der Herstellung ist und leicht mit Lichtstreustrukturen versehen werden kann. Auch andere Materialien können für das Lichtleitelement genutzt werden, insbesondere solche, die in eine flache Form gebracht und einer Bearbeitung mittels Lasern oder Fräsen unterzogen werden können, bspw. auch Glas. Das Material des Adapters kann, muss aber nicht, mit dem des Lichtleitelements übereinstimmen.

Das Lichtleitelement kann mittels 3D-Druck gefertigt werden, ebenso der oder die Adapter. So können die Passformen zuverlässig aufeinander abgestimmt werden.

Die Erfindung bezieht sich ferner auf ein Lichtleit-Set, das nach einer ersten Ausführungsform mehrere der erfindungsgemäßen Lichtleitvorrichtungen umfasst. So können aus mehreren Lichtleitvorrichtungen zwei- oder gar dreidimensionale Lichtbilder aufgebaut werden, oder die Lichtleitvorrichtungen können ähnlich wie eine Lichterkette eingesetzt werden und dabei beispielsweise dekorativ oder als Werbung wirken.

Ein Set kann dabei auf verschiedene Weise aufgebaut sein: Da die Adapter(-Typen) für viele verschiedene Lichtleitelemente eingesetzt werden können, kann ein Set bspw. viele unterschiedliche Lichtleitelemente enthalten, und eine Grund-Anzahl an Adaptern, die dann jeweils mit den Lichtleitelementen kombiniert werden können. Natürlich ist es auch möglich, dass auch Lichtleitelemente in einem Set enthalten sind, die jeweils mit mehreren Adaptern zugleich bestückt werden können, da ein solches Lichtleitelement zumindest zwei Ausnehmungen zur Aufnahme eines Adapters hat.

Das Set kann in einer noch weiteren Ausführungsform auch die Leuchtmittel umfassen, und zusätzlich gegebenenfalls auch eine Stromzuführungsleitung, die mehrere Leuchtmittel verbinden kann.

Im Unterschied zu bekannten Lichterketten, deren Lichter zwar in verschiedenen Formen angeordnet oder auch anlassbezogen bestimmte, ungewöhnliche Formen aufweisen können, können bei der Erfindung die Lichtleitelemente jederzeit abgenommen werden (für ein neutrales Bild) oder ausgetauscht und je nach Anlass passend gestaltete Lichtleitelemente aufgesetzt werden. Es müssen also nicht eine Vielzahl unterschiedlicher Leuchtmittel oder Lichterketten vorgehalten werden, sondern nur die austauschbaren Lichtleitelemente. Neben Aufbewahrungsplatz werden so auch Kosten eingespart.

Weitere Ausführungsformen der Lichtleitvorrichtung sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Gegenstände oder Teile derselben, die im Wesentlichen gleich oder ähnlich sind, können mit denselben Bezugszeichen versehen sein. Die Figuren sind lediglich eine schematische Darstellung einer Ausführungsform der Erfindung.

Dabei zeigen:
- **Fig. 1**: Einen Adapter der erfindungsgemäßen Lichtleitvorrichtung **a)** in einer perspektivischen Ansicht, **b)** in einer Frontansicht, **c)** in einem Querschnitt und **d)** in einem Längsschnitt,
- **Fig. 2**: eine Seitenansicht eines auf ein Leuchtmittel aufgesetzten Adapters und eines Lichtleitelements im nicht verbundenen Zustand,
- **Fig. 3**: eine Seitenansicht des Adapters und des Lichtleitelements aus **Fig. 2**, zu einer Lichtleitvorrichtung verbunden.
- **Fig. 4**: eine Seitenansicht eines auf ein Leuchtmittel aufgesetzten Adapters und eines weiteren Lichtleitelements im nicht verbundenen Zustand,
- **Fig. 5**: eine Seitenansicht des Adapters und des Lichtleitelements aus **Fig. 4**, zu einer weiteren Lichtleitvorrichtung verbunden,
- **Fig. 6**: eine Ansicht einer weiteren Lichtleitvorrichtung mit einem abgewinkelten Lichtleitelement mit Lichtstreustrukturen,
- **Fig. 7**: eine Ansicht einer weiteren Lichtleitvorrichtung aus mehreren Adaptern und einem Lichtleitelement mit Lichtstreustrukturen.

Die vorliegende Erfindung betrifft eine Lichtleitvorrichtung, die einen oder mehrere Adapter zum Aufnehmen eines Leuchtmittels sowie ein an dem bzw. den Adaptern angebrachtes Lichtleitelement aufweist, und ein Lichtleit-Set, das neben mehreren Lichtleitvorrichtungen mehrere Leuchtmittel aufweist.

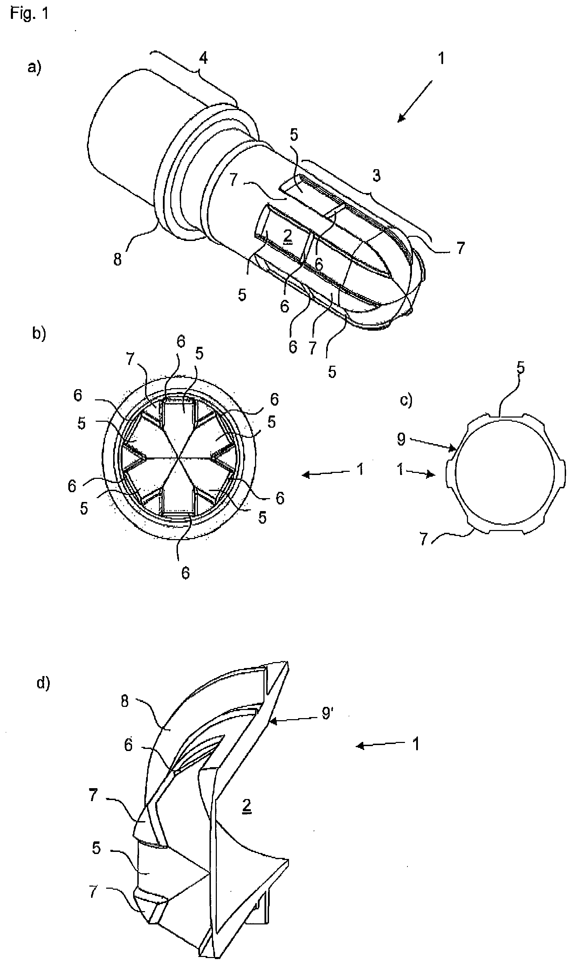

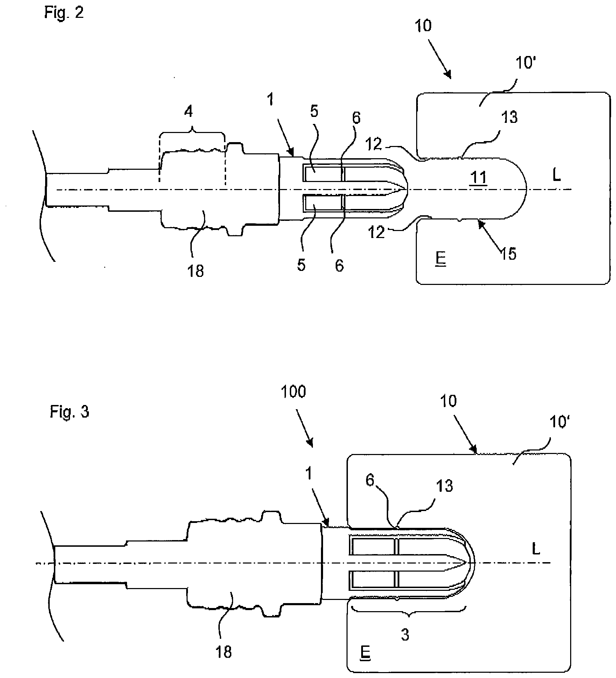

**Fig. 1** zeigt einen Adapter 1, der über einen vorderen Endabschnitt 3 mit einem Lichtleitelement 10 verbunden werden kann und der eine zylindrische Ausnehmung 2 aufweist (**Fig. 1** **d**)), die dazu ausgebildet ist, ein bestimmtes Leuchtmittel (in den Figuren nicht gesondert dargestellt) aufzunehmen. Der Adapter 1 weist an seiner Außenmantelfläche im Bereich des Endabschnitts 3 mehrere längliche Rillen 5 auf, die umfänglich symmetrisch verteilt angeordnet sind. Zwischen den Rillen 5 verbleiben jeweils Streifen 7 stehen. In **Fig. 1** **b**) (Blickrichtung vom Endabschnitt 3 aus) ist zu erkennen, dass je sechs Rillen 5 und Streifen 7 vorliegen, die symmetrisch verteilt angeordnet sind und somit im Endbereich 3 die in **Fig. 1** **c**) gezeigte Querschnittsform 9 des Adapters 1 bilden. Unter Rückbezug auf **Fig. 1d**) wird verdeutlicht, dass der Adapter an seinem Endabschnitt 3 eine geschlossene Materialdecke aufweist; dort, wo die Rillen 5 sind, ist die Materialdecke 5 verjüngt. Entsprechend der Ausführung in Bezug auf die Querschnittsform 9, die in den gezeigten Figuren, besonders Fig. 2, als U-förmig zu erkennen ist und somit quasi kappen- oder kuppelförmig, ist die Ausnehmung 15 ebenfalls U-förmig.

Innerhalb der länglichen Rillen 5 ist jeweils ein in Umfangsrichtung verlaufender Steg 6 angeordnet, der jeweils zwei benachbarte Streifen 7 verbindet.

Der Adapter 1 weist ferner an seinem dem Endabschnitt 3 entgegen gesetzten Ende einen Fußabschnitt 4 auf, an dessen fußseitigem Ende eine Öffnung zu der zylindrischen Ausnehmung 2 vorliegt, durch die ein Leuchtmittel in die zylindrische Ausnehmung 2 gebracht werden kann.

Der Fußabschnitt 4 wird durch einen umfänglichen abgesetzten Wulst 8 vom vorderen Teil des Adapters 1 abgegrenzt. Es ist denkbar, dass der Endabschnitt 3 sowie die Rillen 5 und Streifen 7 sich ebenfalls bis zu diesem abgesetzten Wulst 8 erstrecken. An dem Wulst 8 kommen Lichtleitelemente 10 zur Anlage, die nicht allein, sondern über ein zusätzliches Sicherungselement fest mit dem Endabschnitt 3 verbunden sind.

In **Fig. 2** ist dieser Adapter 1 mit einer darin aufgenommenen LED als Leuchtmittel dargestellt, wobei der Fußabschnitt 4 über einen übergestülpten Schrumpfschlauch 18 an dem Leuchtmittel bzw. dessen Sockel, Halterung oder Leitung verbunden ist.

Der Adapter 1 ist universell für eine Vielzahl von Lichtleitvorrichtungen, wie sie beispielsweise in **Fig. 3****,** **5****,** **6 und 7** gezeigt sind, verwendbar. Beispielhaft ist der in den Figuren gezeigte Adapter 1 so ausgebildet, dass er eine LED, die standardmäßig in einem kuppelartigen Gehäuse vorliegt, aufnehmen kann. Soll die Lichtleitvorrichtung 100 an ein anderes Leuchtmittel angeschlossen werden, muss der Adapter 1 entsprechend dimensioniert werden - dem Fachmann ist bekannt, wie er die zylindrische Ausnehmung 2 gestalten kann, damit das gewünschte Leuchtmittel darin Platz findet.

Dabei kann die zylindrische Ausnehmung 2 des Adapters 1 so geformt sein, dass das darin platzierte Leuchtmittel quasi eingeklemmt wird und somit nicht aus dem Adapter 1 herausfallen kann, oder die Verbindung wird durch zusätzliche Befestigungselemente gesichert. Der in den Figuren gezeigte Schrumpfschlauch 18, der über den Fußabschnitt 4 sowie Teile des Leuchtmittels gestülpt wird, stellt nur ein Beispiel dar, das zugleich optisch ansprechend die Verbindungsstelle kaschiert. Ein Gummi- oder Klebeband kann ein alternatives Befestigungselement sein. Ebenfalls denkbar ist eine quasi vergossene Ausführung des Adapters 1, der das Leuchtmittel direkt enthält.

Ein Lichtleitelement 10 in Form einer Platte 10' liegt im noch nicht mit dem Adapter 1 verbundenen Zustand vor. Zwar ist es denkbar, dass zunächst Adapter 1 und Lichtleitelement 10 miteinander zur erfindungsgemäßen Lichtleitvorrichtung 100 verbunden werden, ehe das Leuchtmittel in dem Adapter 1 aufgenommen wird, es ist jedoch praktikabler und gerade einer der Vorteile der Erfindung, dass der Adapter 1 bereits an dem Leuchtmittel vorliegen kann und daran ein beliebiges (an dem Adapter 1 anbringbares) Lichtleitelement 10, das je nach gewünschtem Lichteffekt unterschiedlich gestaltet sein kann, angebracht wird.

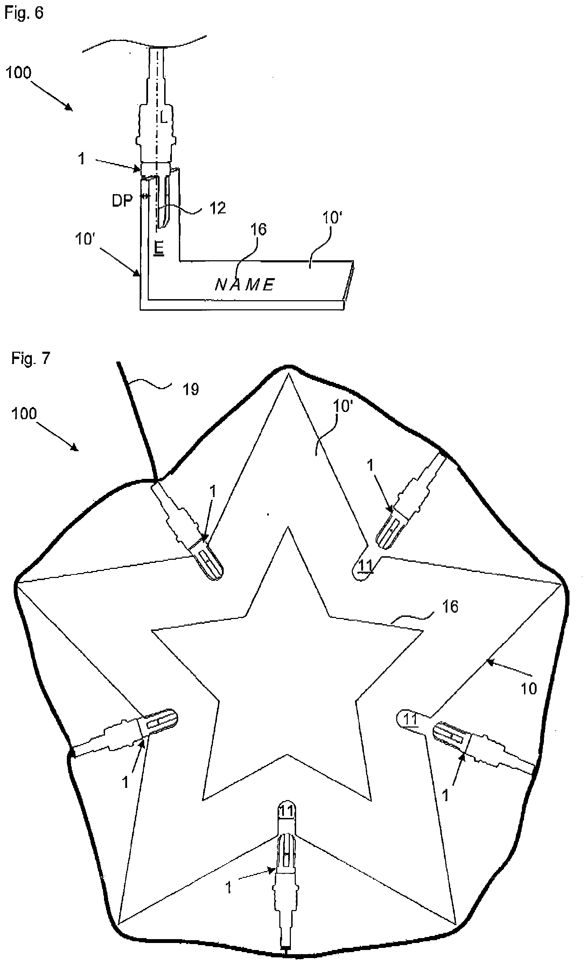

Das Lichtleitelement 10 weist eine Ausnehmung 11 auf, um den Endabschnitt 3 des Adapters 1 darin aufzunehmen. Dazu ist die Dicke DP des Plättchens 10', wie in Fig. 6, so gewählt, dass es an der Innenseite der Ausnehmung 11 beiderseits je eine Schiene 12 bildet, die beiderseits des Endabschnitts 3 des Adapters 1 in je eine der länglichen Rillen 5 eingeführt werden kann. **Fig. 3** zeigt die Lichtleitvorrichtung 100, bei der die Platte 10' auf den Adapter 1 aufgesteckt und so mit diesem verbunden ist, der Endabschnitt 3 liegt innerhalb der Ausnehmung 11. Die Ausnehmung 11 liegt in einem Verbindungsabschnitt vor, der in diesem Fall in der gleichen Ebene E wie die gesamte Platte 10' liegt und parallel zur Längsachse L des Adapters verläuft. Die geöffnete Umfangsform 15 der Ausnehmung 11 der Platte 10', in **Fig. 3** eine U-Form, entspricht der Längsschnittsform 9' des Adapters 1, der folglich im Längsschnitt auch eine U-Form zeigt, und damit an seinem Ende eine geschlossene Materialdecke aufweist, sodass der Adapter 1 möglichst ohne Spiel an dem Umfang 15 der Ausnehmung 11 zu liegen kommt und die Lichtübertragung vom Leuchtmittel durch den Adapter 1 in die Platte 10' stattfinden kann. Die geschlossene Materialdecke ist hier kuppel- oder kappenförmig.

Zusätzlich ist das Lichtleitelement 10 über zwei Sicherungselementepaare, jeweils gebildet durch eine Nut 13 an jeder Schiene 12 der Platte 10' und einen Steg 6 am Endabschnitt 3 des Adapters 1, am Adapter 1 gesichert, indem die zwei Stege 6, die innerhalb der Rinnen 5 liegen, in die die Schienen 12 eingeführt sind, sich in den Nuten 13 verrasten. Ein ungewolltes Lösen wird somit verhindert.

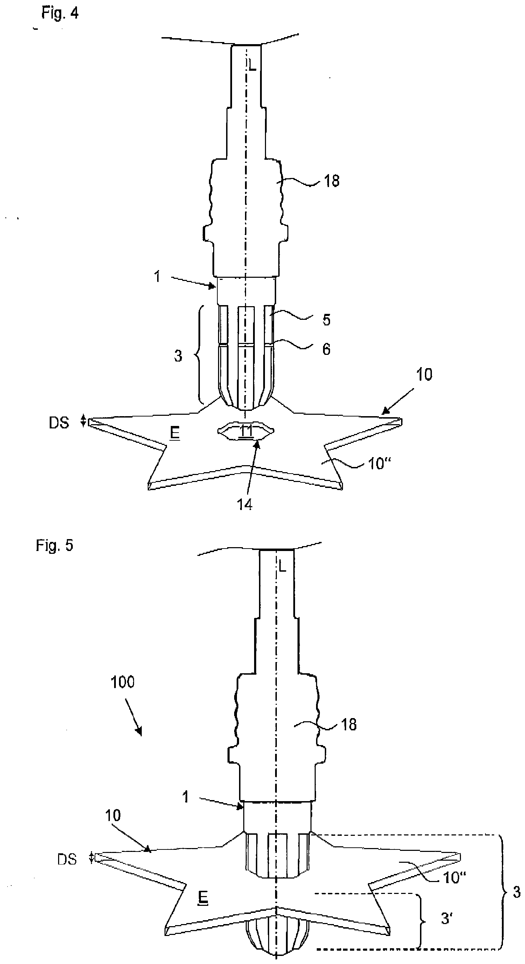

**Fig. 4** und **Fig. 5** zeigen eine Ausführungsform der Lichtleitvorrichtung 100 mit einer sternförmigen Scheibe 10" als Lichtleitelement 10, die in **Fig. 4** noch vom Adapter .1 gelöst, in **Fig, 5** mit diesem verbunden vorliegt. Der Adapter 1 ist der in **Fig. 1** gezeigte, der auch für die Scheibe 10" zur Verbindung mit einem Leuchtmittel dienen kann. Die Ausnehmung 11 liegt in einem Verbindungsabschnitt im Zentrum der Scheibe 10" vor und weist eine geschlossene Umfangsform 14 auf, die mit der Querschnittsform 9 des Endabschnitts 3 des Adapters 1 übereinstimmt. Die Ebene E ist die Ebene, in der sich neben dem Verbindungsabschnitt die gesamte Scheibe 10" erstreckt, die hier orthogonal zur Längsachse L des Adapters 3 liegt. Dennoch kann der Endabschnitt 3 des Adapters 1 in die Ausnehmung 11 hinein und mit einem Kopfteil 3' darüber hinaus geführt werden, sodass Lichtleitelement 10 und Adapter 1 lichtleitend verbunden werden. Auch am Umfang 14 der Ausnehmung 11 der Scheibe 10" können zusätzliche Sicherungselemente vergleichbar der Nut 13 vorliegen.

Ein Lichtleitelement 10, in das Lichtstreustrukturen 16 in Form von Buchstaben eingeritzt sind, ist in Fig. 6 mit dem Adapter 1 zu einer Lichtleitvorrichtung 100 verbunden. Der Verbindungsabschnitt ist wie in **Fig. 2** und **Fig. 3** gestaltet, indem am Umfang der Ausnehmung 11 zwei Schienen 12 gebildet werden, die mit zwei der Rinnen 5 des Adapters 1 in Eingriff stehen. Jedoch liegt nur der Teil der Platte 10', der den Verbindungsabschnitt mit der Ausnehmung 11 aufweist, in einer zur Längsachse L des Adapters 3 parallelen Ebene E, ein weiterer Teil, der in der gezeigten Ausführungsform die Lichtstreustrukturen 16 enthält, ist dazu um 90° abgewinkelt.

In **Fig. 7** wird die erfindungsgemäße Lichtleitvorrichtung 100 durch insgesamt fünf Adapter 1, aber nur ein einziges Lichtleitelement 10 als sternförmige Platte 10' gebildet, in die außerdem eine Lichtstreustruktur 16 in derselben, verkleinerten Sternform eingebracht ist. Zwei der Adapter 1 sind bereits mit der Platte 10' verbunden, drei müssen noch in die jeweiligen, noch freien Ausnehmungen 11 eingeschoben werden. So wird das Lichtleitelement 10 durch mehrere Lichtquellen, die durch in die zylindrischen Ausnehmungen 2 der Adapter 1 eingesetzte Leuchtmittel bereitgestellt werden, gleichmäßig gespeist und kann in dieser doppelten Stemform aufleuchten.

Alle Leuchtmittel kontaktieren eine stromführende Leitung 19, die alle Leuchtmittel miteinander verbindet und den Anschluss an eine Energiequelle bereitstellt. Alternativ können die Energiequellen durch Batterien direkt an den einzelnen Leuchtmitteln vorliegen.

Der größte Vorteil der erfindungsgemäßen Lichtleitvorrichtung besteht in der Gestaltung von Lichtleit-Sets mit verschiedenen Lichtleitelementen 10. So können bei allen der in den Figuren gezeigten Lichtleitvorrichtungen 100 die Lichtleitelemente 10 ausgetauscht werden und so bspw. statt eines Sterns die beschriftete Platte 10' angeschlossen werden. Durch die Vielfalt der Gestaltungsoptionen von Form, Größe und eingebrachter Lichtstreustrukturen 16 des Lichtleitelements 10 kann so die dekorative Beleuchtung anlassbezogen variiert werden.

Mit diesem Adapter 1 könnten bspw. auch drei Platten 10', die sich in drei Ebenen in einem gemeinsamen Verbindungsabschnitt kreuzen, verbunden werden -je eine Platte 10' kann mit einem Randabschnitt als Schienen 12 in zwei Rillen 5, die sich bezüglich der Längsachse L des Adapters 1 gegenüber liegen, eingeschoben werden.

Es versteht sich, dass der Adapter 1 auch anders als in den Figuren gezeigt gestaltet sein kann, nicht nur in Bezug auf dessen Größe, sondern auch auf die Anzahl, Breite, Länge der Rinnen 5, Stege 6 etc.

Auch könnten alternative Verbinderelemente vorliegen, etwa ein Gewinde, das im Grunde schon durch schräg verlaufende, also sich leicht umfänglich um die Mantelfläche des Endabschnitts des Adapters 1 windende Rinnen gebildet werden kann. Vorteilhaft werden jedoch mehrere Lichtleitelemente 10 so gestaltet, dass sie mit der gleichen Adapterform verbunden werden können, weisen also Verbinderelemente auf, die zu denen des Adapters korrespondierend. Diese können in einem erfindungsgemäßen Lichtleit-Set gemeinsam vorliegen, wobei das Set auch die nötigen Leuchtmittel mit umfassen kann.

### BEZUGSZEICHENLISTE

- 1: Adapter
- 10: Lichtleitelement
- 100: Lichtleitvorrichtung
- 2: zylindrische Ausnehmung
- 3: Endabschnitt
- 3': Kopfteil
- 4: Fußabschnitt
- 5: Rille
- 6: Steg
- 7: Streifen
- 8: abgesetzter Wulst
- 9: Querschnittsform
- 9`: Längsschnittsform
- 10': Platte
- 10": Scheibe
- 11: Ausnehmung
- 12: Schiene
- 13: Nut
- 14: Umfangsform Ausnehmung Scheibe
- 15: Umfangsform Ausnehmung Platte
- 16: Lichtstreustruktur
- 18: Schrumpfschlauch
- 19: Leitung

- E: Ebene Verbindungsabschnitt Lichtleitelement
- L: Längsachse
- DS: Dicke Scheibe
- DP: Dicke Platte

## Patentansprüche

1. Lichtleitvorrichtung (100), ausgebildet zur Aufnahme eines Leuchtmittels, wobei die Lichtleitvorrichtung (100) zumindest einen Adapter (1) und ein zumindest teilweise transparentes Lichtleitelement (10) aufweist, wobei der Adapter (1)
- eine zylindrische Ausnehmung (2) aufweist, die dazu ausgebildet ist, genau ein Leuchtmittel aufzunehmen,
- und über einen vorderen Endabschnitt (3), an dem der Adapter (1) eine geschlossene Materialdecke aufweist, mit dem Lichtleitelement (10) verbunden ist, indem er in einer Ausnehmung (11) des Lichtleitelements (10) mit dem Endabschnitt (3) lösbar aufgenommen ist, und
- zumindest an für Lichtdurchtritt vorgesehenen Stellen transparent oder transluzent für das Licht des Leuchtmittels ist.

2. Lichtleitvorrichtung (100) nach Anspruch 1,
**dadurch gekennzeichnet, dass**
das Lichtleitelement (10) eine Scheibe (10") mit einer Dicke (DS) ist, die einen Verbindungsabschnitt aufweist, der sich in einer Ebene (E) erstreckt, die orthogonal zu einer Längsachse (L) des Adapters (1) verläuft, wobei die Scheibe (10") die zumindest eine Ausnehmung (11) aufweist, deren Umfangsform (14) einem Außenumfang (9) des Endabschnitts (3) des Adapters (1) entspricht, und/oder wobei durch ein Verbinderelementepaar die Scheibe (10") mit dem Adapter (1) lösbar verbunden ist,
wobei bevorzugt das Verbinderelementepaar ein Innengewinde und ein Außengewinde umfasst, wobei das Innengewinde in die Ausnehmung (11) der Scheibe (10") eingeschnitten ist und das Außengewinde umfänglich an dem Endabschnitt (3) des Adapters (1) vorliegt, oder umgekehrt.

3. Lichtleitvorrichtung (100) nach Anspruch 1,
**dadurch gekennzeichnet, dass**
das Lichtleitelement (10) eine Platte (10') mit einer Dicke (DP) ist, die einen Verbindungsabschnitt aufweist, der sich in einer Ebene (E) erstreckt, die achsparallel zu einer Längsachse (L) des Adapters (1) verläuft, wobei die Platte (10') die zumindest eine Ausnehmung (11) aufweist, deren Umfangsform (15) einer Längsschnittsform (9') des Endabschnitts (3) des Adapters (1) entspricht, und/oder wobei ein oder mehrere Verbinderelementepaare die Platte (10') mit dem Adapter (1) lösbar verbindet/verbinden,
wobei bevorzugt das Verbinderelementepaar aus einer Rille (5) und einer zu der Rille (5) korrespondierenden Schiene (12) besteht, wobei bevorzugt die Rille (5) in eine Außenmantelfläche des Adapters (1) eingebracht ist und die Schiene (12) durch einen Randabschnitt der Ausnehmung (11) der Platte (10') bereitgestellt ist.

4. Lichtleitvorrichtung (100) nach Anspruch 1,
**dadurch gekennzeichnet, dass**
das Lichtleitelement (10) zwei oder mehr Platten (10') mit einer Dicke aufweist, wobei die Platten sich derart kreuzen, dass ein gemeinsamer Verbindungsabschnitt gebildet wird, der sich in einer oder mehreren Ebenen (E) erstreckt, die achsparallel zu einer Längsachse (L) des Adapters (1) verlaufen, wobei die Platten (10') die zumindest eine Ausnehmung (11) bilden, deren Umfangsform einer Längsschnittsform (9') des Endabschnitts (3) des Adapters (1) entspricht,
und/oder wobei ein oder mehrere Verbinderelementepaare die Platten (10') mit dem Adapter (1) verbindet/verbinden,
wobei bevorzugt ein Verbinderelementepaar aus einer Rille (5) und einer zu der Rille (5) korrespondierenden Schiene (12) besteht, wobei bevorzugt die Rille (5) in die Außenmantelfläche des Adapters (1) eingebracht ist und die Schiene (12) durch einen Randabschnitt der Ausnehmung (11) der Platten (10') bereitgestellt ist.

5. Lichtleitvorrichtung (100) nach Anspruch 1,
**dadurch gekennzeichnet, dass**
das Lichtleitelement (10) ein massiver Körper ist, der die zumindest eine Ausnehmung (11) aufweist, die dem Endabschnitt (3) des Adapters (1) in Länge, Umfang und Umfangsform entspricht, undloder wobei ein oder mehrere Verbinderelementepaare den Körper mit dem Adapter (1) verbindet/verbinden,
wobei bevorzugt das Verbinderelementepaar ein Innengewinde und ein Außengewinde umfasst, wobei das Innengewinde in die Ausnehmung (11) des Körpers eingeschnitten ist und das Außengewinde umfänglich an dem Endabschnitt (3) des Adapters (1) vorliegt, und/oder ein Verbinderelementepaar aus einer Rille (5) und einer zu der Rille (5) korrespondierenden Schiene (12) besteht, wobei bevorzugt die Rille (5) in eine Außenmantelfläche des Adapters (1) eingebracht ist und die Schiene (12) am Umfang der Ausnehmung (11) des Körpers vorliegt.

6. Lichtleitvorrichtung (100) nach zumindest einem der Ansprüche 1 bis 5,
**dadurch gekennzeichnet, dass**
der Adapter (1) von zumindest einem Sicherungselementepaar im Lichtleitelement (10) gehalten wird, wobei bevorzugt das Sicherungselementepaar aus einem Steg (6) und einer dazu korrespondierenden Nut (13) besteht, wobei bevorzugt der Steg (6) an dem Endabschnitt (3) des Adapters (1) und die Nut (13) an der Ausnehmung (11) des Lichtleitelements (10) vorliegt, und/oder die Lichtleitvorrichtung (100) einen Sicherungsaufsatz mit einer Ausnehmung aufweist, in der der Adapter (1) mit einem über den in der Ausnehmung (11) des Lichtleitelements (10) aufgenommenen Teil des Endabschnitts (3) hinausragenden Kopfteil (3') aufgenommen ist, und zumindest ein Sicherungselementepaar den Sicherungsaufsatz mit dem Adapter (1) verbindet, wobei das Sicherungselementepaar bevorzugt aus einem umfänglich an dem Kopfteil (3') des Endabschnitts (3) des Adapters (1) vorliegenden Außengewinde und einem in die Ausnehmung des Sicherungsaufsatzes eingeschnittenen Innengewinde, undloder einem Steg und einer Nut besteht, wobei bevorzugt der Steg an dem Endabschnitt (3) des Adapters (1) und die Nut (13) an der Ausnehmung des Sicherungsaufsatzes vorliegt.

7. Lichtleitvorrichtung (100) nach zumindest einem der Ansprüche 1 bis 6,
**dadurch gekennzeichnet, dass**
die zylindrische Ausnehmung (2) dazu ausgebildet ist, eine LED als Leuchtmittel aufzunehmen.

8. Lichtleitvorrichtung (100) nach zumindest einem der Ansprüche 1 bis 7,
**dadurch gekennzeichnet, dass**
an dem Lichtleitelement (10) Lichtstreustrukturen (16) vorliegen, die bevorzugt Kanäle oder Mulden sind und in zumindest eine Oberfläche des Lichtleitelements (10) eingebracht sind, bevorzugt durch Einritzen, Einschneiden, Lasern oder Ätzen.

9. Lichtleitvorrichtung (100) nach zumindest einem der Ansprüche 1 bis 8,
**dadurch gekennzeichnet, dass**
das Lichtleitelement (10) aus einem transparenten Kunststoff, bevorzugt aus Polymethylmethacrylat besteht undloder
das Lichtleitelement (10) im 3D-Druck hergestellt ist.

10. Lichtleit-Set, das eine Mehrzahl an Lichtleitvorrichtungen (100) nach zumindest einem der Ansprüche 1 bis 9 umfasst.

11. Lichtleit-Set nach Anspruch 10, wobei mehr Lichtleitelemente (10) als Adapter vorgesehen sind, und wobei zumindest zwei Lichtleitelemente (10) sich voneinander unterscheiden.

12. Lichtleit-Set nach Anspruch 10, wobei mehr Adapter (1) als Lichtleitelemente (10) vorgesehen sind, und wobei zumindest ein Lichtleitelement (10) zumindest zwei Ausnehmungen (11) zur Aufnahme eines Adapters (1) hat.

13. Lichtleit-Set nach zumindest einem der Ansprüche 10 bis 12,
das eine Vielzahl an Leuchtmitteln zur Aufnahme in die Adapter (1) aufweist, und wobei bevorzugt mehrere Leuchtmittel über eine gemeinsame Stromzuführungsleitung (19) verbunden sind.

## Claims

1. A light guiding device (100), formed for receiving an illuminant, wherein the light guiding device (100) has at least one adapter (1) and an at least partially transparent light guiding element (10), wherein the adapter (1)
- has a cylindrical recess (2) formed to receive exactly one illuminant,
- and is connected to the light guiding element (10) via a front end section (3), on which the adapter (1) has a closed material cover, in that it is releasably received in a recess (11) of the light guiding element (10) with the end section (3), and
- is transparent or translucent for the light of the illuminant at least at points provided for light passage.

2. The light guiding device (100) according to claim 1,
**characterized in that**
the light guiding element (10) is a disk (10") with a thickness (DS), which has a connecting section, which extends in a plane (E), which runs orthogonally to a longitudinal axis (L) of the adapter (1), wherein the disk (10") has the at least one recess (11), the circumferential shape (14) of which corresponds to an outer circumference (9) of the end section (3) of the adapter (1), and/or wherein the disk (10") is releasably connected to the adapter (1) by means of a connector element pair,
wherein the connector element pair preferably comprises an internal thread and an external thread, wherein the internal thread is notched into the recess (11) of the disk (10") and the external thread is present circumferentially on the end section (3) of the adapter (1), or vice versa.

3. The light guiding device (100) according to claim 1,
**characterized in that**
the light guiding element (10) is a plate (10') with a thickness (DP), which has a connecting section, which extends in a plane (E), which runs axially parallel to a longitudinal axis (L) of the adapter (1), wherein the plate (10') has the at least one recess (11), the circumferential shape (15) of which corresponds to a longitudinal sectional shape (9') of the end section (3) of the adapter (1), and/or wherein one or several connector element pairs releasably connects/connect the plate (10') to the adapter (1), wherein the connector element pair preferably consists of a groove (5) and a rail (12) corresponding to the groove (5), wherein the groove (5) is preferably introduced into an outer jacket surface of the adapter (1), and the rail (12) is provided by an edge section of the recess (11) of the plate (10').

4. The light guiding device (100) according to claim 1,
**characterized in that**
the light guiding element (10) has two or more plates (10') with a thickness, wherein the plates cross one another in such a way that a common connecting section is formed, which extends in one or several planes (E), which run axially parallel to a longitudinal axis (L) of the adapter (1), wherein the plates (10') form the at least one recess (11), the circumferential shape of which corresponds to a longitudinal sectional shape (9') of the end section (3) of the adapter (1),
and/or wherein one or several connector element pairs connects/connect the plates (10') to the adapter (1),
wherein a connector element pair preferably consists of a groove (5) and a rail (12) corresponding to the groove (5), wherein the groove (5) is preferably introduced into the outer jacket surface of the adapter (1) and the rail (12) is provided by an edge section of the recess (11) of the plates (10').

5. The light guiding device (100) according to claim 1,
**characterized in that**
the light guiding element (10) is a massive body, which has the at least one recess (11), which corresponds to the end section (3) of the adapter (1) in length, circumference and circumferential shape, and/or wherein one or several connector element pairs connects/connect the body to the adapter (1),
wherein the connector element pair preferably comprises an internal thread and an external thread, wherein the internal thread is notched into the recess (11) of the body and the external thread is present circumferentially on the end section (3) of the adapter (1), and/or a connector element pair consists of a groove (5) and a rail (12) corresponding to the groove (5), wherein the groove (5) is preferably introduced into an outer jacket surface of the adapter (1) and the rail (12) is present on the circumference of the recess (11).

6. The light guiding device (100) according to at least any one of claims 1 to 5,
**characterized in that**
the adapter (1) is held in the light guiding element (10) by at least one securing element pair, wherein the securing element pair preferably consists of a web (6) and a groove (13) corresponding thereto, wherein the web (6) is preferably present on the end section (3) of the adapter (1) and the groove (13) on the recess (11) of the light guiding element (10), and/or
the light guiding device (100) has a securing attachment comprising a recess, in which the adapter (1) is received with a head part (3') protruding beyond the part of the end section (3), which is received in the recess (11) of the light guiding element (10), and at least one securing element pair connects the securing attachment to the adapter (1), wherein the securing element pair preferably consists of an external thread, which is present circumferentially on the head part (3') of the end section (3) of the adapter (1) and an internal thread notched into the recess of the securing attachment, and/or a web and a groove, wherein the web is preferably present on the end section (3) of the adapter (1) and the groove (13) on the recess of the securing attachment.

7. The light guiding device (100) according to at least any one of claims 1 to 6,
**characterized in that**
the cylindrical recess (2) is formed to receive an LED as illuminant.

8. The light guiding device (100) according to at least any one of claims 1 to 7,
**characterized in that**
light scattering structures (16) are present on the light guiding element (10), which are preferably channels or depressions and which are introduced into at least one surface of the light guiding element (10), preferably by means of carving, notching, lasering or etching.

9. The light guiding device (100) according to at least any one of claims 1 to 8,
**characterized in that**
the light guiding element (10) consists of a transparent plastic, preferably of polymethylmethacrylate and/or
the light guiding element (10) is produced using 3D printing.

10. A light guiding set, which comprises a plurality of light guiding devices (100) according to at least any one of claims 1 to 9.

11. The light guiding set according to claim 10, wherein more light guiding elements (10) than adapters are provided, and wherein at least two light guiding elements (10) differ from one another.

12. The light guiding set according to claim 10, wherein more adapters (1) than light guiding elements (10) are provided, and wherein at least one light guiding element (10) has at least two recesses (11) for receiving an adapter (1).

13. The light guiding set according to at least any one of claims 10 to 12,
which has a plurality of illuminants for reception in the adapters (1), and wherein several illuminants are preferably connected via a common power supply line (19).

## Revendications

1. Dispositif de guidage de la lumière (100), conçu pour recevoir un moyen d'éclairage, le dispositif de guidage de la lumière (100) présentant au moins un adaptateur (1) et un élément de guidage de la lumière (10) au moins partiellement transparent, l'adaptateur (1)
- présentant un évidement cylindrique (2) qui est conçu pour recevoir exactement un moyen d'éclairage,
- et étant relié à l'élément de guidage de la lumière (10) par une section d'extrémité (3) avant, au niveau de laquelle l'adaptateur (1) présente une couverture de matériau fermée, en étant logé de manière amovible avec la section d'extrémité (3) dans un évidement (11) de l'élément de guidage de la lumière (10), et
- étant transparent ou translucide pour la lumière du moyen d'éclairage, au moins aux endroits prévus pour le passage de la lumière.

2. Dispositif de guidage de la lumière (100) selon la revendication 1,
**caractérisé en ce que**
l'élément de guidage de la lumière (10) est un disque (10") ayant une épaisseur (DS) et comprenant une section de liaison s'étendant dans un plan (E) qui est orthogonal à un axe longitudinal (L) de l'adaptateur (1), le disque (10") présentant le au moins un évidement (11), dont la forme périphérique (14) correspond à une circonférence extérieure (9) de la section d'extrémité (3) de l'adaptateur (1), et/ou le disque (10") étant relié de manière amovible à l'adaptateur (1) par une paire d'éléments de liaison, la paire d'éléments de liaison comprenant de préférence un filetage intérieur et un filetage extérieur, le filetage intérieur étant découpé dans l'évidement (11) du disque (10") et le filetage extérieur étant présent sur la circonférence de la section d'extrémité (3) de l'adaptateur (1), ou inversement.

3. Dispositif de guidage de la lumière (100) selon la revendication 1,
**caractérisé en ce que**
l'élément de guidage de la lumière (10) est une plaque (10') ayant une épaisseur (DP) et comprenant une section de liaison s'étendant dans un plan (E) qui est parallèle à un axe longitudinal (L) de l'adaptateur (1), la plaque (10') présentant ledit au moins un évidement (11), dont la forme périphérique (15) correspond à une forme de section longitudinale (9') de la section d'extrémité (3) de l'adaptateur (1), et/ou une ou plusieurs paires d'éléments de liaison reliant de manière amovible la plaque (10') à l'adaptateur (1),
la paire d'éléments de liaison étant de préférence composée d'une rainure (5) et d'un rail (12) correspondant à la rainure (5), la rainure (5) étant de préférence placée dans une surface d'enveloppe extérieure de l'adaptateur (1) et le rail (12) étant fourni par une section de bord de l'évidement (11) de la plaque (10').

4. Dispositif de guidage de la lumière (100) selon la revendication 1,
**caractérisé en ce que**
l'élément de guidage de la lumière (10) comprend deux plaques (10') ou plus, ayant une épaisseur, les plaques se croisant de manière à former une section de liaison commune s'étendant dans un ou plusieurs plans (E) qui sont parallèles à un axe longitudinal (L) de l'adaptateur (1), les plaques (10') formant ledit au moins un évidement (11), dont la forme périphérique correspond à une forme en coupe longitudinale (9') de la section d'extrémité (3) de l'adaptateur (1),
et/ou une ou plusieurs paires d'éléments de liaison reliant les plaques (10') à l'adaptateur (1),
une paire d'éléments de liaison étant de préférence composée d'une rainure (5) et d'un rail (12) correspondant à la rainure (5), la rainure (5) étant de préférence placée dans la surface d'enveloppe extérieure de l'adaptateur (1) et le rail (12) étant fourni par une section de bord de l'évidement (11) des plaques (10').

5. Dispositif de guidage de la lumière (100) selon la revendication 1,
**caractérisé en ce que**
l'élément de guidage de la lumière (10) est un bâti massif qui présente le au moins un évidement (11) qui correspond à la section d'extrémité (3) de l'adaptateur (1) en termes de longueur, de circonférence et de forme périphérique, et/ou une ou plusieurs paires d'éléments de liaison reliant le bâti à l'adaptateur (1),
la paire d'éléments de liaison comprenant de préférence un filetage intérieur et un filetage extérieur, le filetage intérieur étant découpé dans l'évidement (11) du bâti et le filetage extérieur étant présent sur la circonférence de la section d'extrémité (3) de l'adaptateur (1), et/ou une paire d'éléments de liaison étant composée d'une rainure (5) et d'un rail (12) correspondant à la rainure (5), la rainure (5) étant de préférence placée dans une surface d'enveloppe extérieure de l'adaptateur (1) et le rail (12) étant présent sur la circonférence de l'évidement (11) du bâti.

6. Dispositif de guidage de la lumière (100) selon au moins l'une des revendications 1 à 5,
**caractérisé en ce que**
l'adaptateur (1) est maintenu dans l'élément de guidage de la lumière (10) par au moins une paire d'éléments de sécurité, la paire d'éléments de sécurité étant de préférence composée d'une entretoise (6) et d'une rainure (13) qui lui correspond, l'entretoise (6) étant de préférence présente sur la section d'extrémité (3) de l'adaptateur (1) et la rainure (13) sur l'évidement (11) de l'élément de guidage de la lumière (10), et/ou
le dispositif de guidage de la lumière (100) présente un chapeau de sécurité avec un évidement dans lequel est logé l'adaptateur (1) avec une partie de tête (3') dépassant de la partie de la section d'extrémité (3) logée dans l'évidement (11) de l'élément de guidage de la lumière (10), et au moins une paire d'éléments de sécurité relie le chapeau de sécurité à l'adaptateur (1), la paire d'éléments de sécurité étant de préférence composée d'un filetage extérieur présent sur la circonférence de la partie de tête (3') de la section d'extrémité (3) de l'adaptateur (1) et d'un filetage intérieur découpé dans l'évidement du chapeau de sécurité, et/ou d'une entretoise et d'une rainure, l'entretoise étant de préférence présente sur la section d'extrémité (3) de l'adaptateur (1) et la rainure (13) étant présente sur l'évidement du chapeau de sécurité.

7. Dispositif de guidage de la lumière (100) selon au moins l'une des revendications 1 à 6,
**caractérisé en ce que**
l'évidement cylindrique (2) est conçu pour recevoir une LED comme moyen d'éclairage.

8. Dispositif de guidage de la lumière (100) selon au moins l'une des revendications 1 à 7,
**caractérisé en ce que**
des structures de diffusion de la lumière (16) sont présentes sur l'élément de guidage de la lumière (10), lesquelles sont de préférence des canaux ou des creux et sont introduites dans au moins une surface de l'élément de guidage de la lumière (10), de préférence par entaille, découpe, laser ou gravure.

9. Dispositif de guidage de la lumière (100) selon au moins l'une des revendications 1 à 8,
**caractérisé en ce que**
l'élément de guidage de la lumière (10) est constitué d'une matière plastique transparente, de préférence du polyméthacrylate de méthyle et/ou
l'élément de guidage de la lumière (10) est fabriqué par impression 3D.

10. Ensemble de guides de lumière comprenant une pluralité de dispositifs de guidage de la lumière (100) selon au moins l'une des revendications 1 à 9.

11. Ensemble de guides de lumière selon la revendication 10, dans lequel il est prévu plus d'éléments de guidage de la lumière (10) que d'adaptateurs, et dans lequel au moins deux éléments de guidage de la lumière (10) se distinguent l'un de l'autre.

12. Ensemble de guides de lumière selon la revendication 10, dans lequel il est prévu plus d'adaptateurs (1) que d'éléments de guidage de la lumière (10), et dans lequel au moins un élément de guidage de la lumière (10) a au moins deux évidements (11) pour recevoir un adaptateur (1).

13. Ensemble de guides de lumière selon au moins l'une des revendications 10 à 12, qui présente une pluralité de moyens d'éclairage destinés à être logés dans les adaptateurs (1), et dans lequel plusieurs moyens d'éclairage sont de préférence reliés par une ligne d'alimentation électrique (19) commune.
